# EUROPEAN PATENT APPLICATION

(11) **EP 4 412 193 A1**
(43) Date of publication of application: **07.08.2024**
(21) Application number: 23275018.2
(22) Date of filing: 01.02.2023
(51) Int. Cl.: H04N 7/18, G06F 3/01, H04N 23/70

(54) **AN AUGMENTED VISION SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to an augmented vision system (200) for a platform operator. The augmented vision system comprises an enhanced vision device (220) for sensing a predetermined band of electromagnetic, EM, radiation in a field of view of the operator, and generating enhanced vision imagery; a tracking system for detecting a field of view of the platform operator, the tracking system comprising at least one source of EM radiation (210) operable within the predetermined band of EM radiation; a display system (204) for overlaying enhanced vision imagery into the view (206) of the platform operator; and switching circuitry (240) configured to control the activation of the enhanced vision device, or to control the activation of source of EM radiation in the tracking system, such that either the enhanced vision device is sensing EM radiation in the field of view, and the source of EM radiation (210) in the tracking system is inactive, or the source of EM radiation (210) in the tracking system is active, and the enhanced vision device is inactive.

## Description

### FIELD

The present invention relates to an augmented vision system. In particular, the invention relates to an augmented vision system for a platform operator, a vehicle comprising an augmented vision system, and a method of operating an augmented vision system.

### BACKGROUND

A camera can be sensitive to a certain band of electromagnetic radiation, such as infrared. When such a camera captures a view whilst it is exposed to the infrared, for example, the infrared is within the field of view of the camera then the resulting image is compromised. The quality of the image received from the camera may be undesirable. On occasions such interaction between the electromagnetic radiation and the camera may lead to fatal fault in an overall system. For example, in an aviation system, a pilot can wear a helmet that comprises infrared emitters, which can interact with a camera that has the helmet within its field of view. This interaction may create undesirable image quality. If the camera is a night vision camera, the camera operates in low level ambient light and is sensitive to Infrared. The present invention aims to address the above problems with camera systems.

### SUMMARY

According to an aspect of the present invention, there is provided an augmented vision system for a platform operator. The augmented vision system comprises an enhanced vision device for sensing a predetermined band of electromagnetic, EM, radiation in a field of view of the platform operator, and generating enhanced vision imagery; a tracking system for detecting a field of view of the platform operator, the tracking system comprising at least one source of EM radiation operable within the predetermined band of EM radiation; a display system for overlaying enhanced vision imagery into the view of the platform operator; and switching circuitry configured to control the activation of the enhanced vision device, or to control the activation of source of EM radiation in the tracking system, such that either the enhanced vision device is sensing EM radiation in the field of view, and the source of EM radiation in the tracking system is inactive, or the source of EM radiation in the tracking system is active, and the enhanced vision device is inactive.

In this way, the undesirable interaction between a source of EM radiation and the enhanced vision device is prevented. The operational rate of both the tracking system and the enhanced vision device can be optimised to produce accurate data needed to operate the platform in a safe, efficient and effective manner.

Preferably, the switching circuitry defines a first period and a first duty cycle for the enhanced vision device activation; and a second period and a second duty cycle for the tracking system EM radiation source activation, for synchronising activation and inactivation.

In this way, the operational rate of individual parts of the augmented vision system is optimised and controlled in a more sophisticated manner without compromising the overall performance of the augmented vision system.

Preferably, the enhanced vision device comprises a camera comprising a shutter which cycles between a closed state and an open state, and the at least one source of EM radiation at the tracking system is configured to generate pulses of EM radiation, synchronised with the closed state of the shutter. Preferably, the shutter is an electronic shutter or a mechanical shutter.

In this way, the at least one source of EM radiation is synchronised with a period in the camera shutter where the camera is not sensitive to external light avoiding the undesirable interaction.

Preferably, the first duty cycle is approximately 90% and the second duty cycle is approximately 10%. Preferably, the first period is in the range of 5 - 40 milliseconds.

In this way, the rate of operation for the at least one source of EM radiation is reduced, saving computational cost.

Preferably, the second period is substantially equal to the first period.

In this way, a full cycle of the operation (e.g., On and OFF) of the at least one source of EM radiation and the night vision system are substantially equal. A single pulse of the at least one source of EM radiation occurs per camera video cycle, so the operational rate of the augmented vision system is optimised.

Preferably, the enhanced vision device is a night vision device. The night vision device optionally comprises at least one of a night vision camera, night vision eyepiece and/or night vision googles. Preferably, the night vision device comprises a short wave infrared camera. Preferably, the predetermined band of EM radiation sensed by the enhanced vision device, comprises non-visible EM frequencies.

Preferably, the tracking system comprises a plurality of sources of EM radiation in the predetermined band, which are configured to be worn by the user. Alternatively or in addition, the plurality of sources of EM radiation in the predetermined band are located around the user on the platform.

Preferably, the plurality of sources of EM radiation are provided at head worn mount. Preferably, the plurality of sources of EM radiation are provided at a helmet.

In this way, the augmented vision system aids a pilot who needs to operate an aircraft in a low-level ambient light and extreme conditions by providing virtual symbology in timely manner with accuracy. The tracking system of the augmented vision system on a helmet ensures the virtual symbology is overlaid correctly.

Preferably, the tracking system further comprises an auxiliary system for monitoring the orientation of a head of the platform operator. The augmented vision system thereby monitors the field of view of the platform operator. Preferably, the auxiliary system comprises at least one of: gyroscope or an accelerometer.

In this way, the augmented vision system allows more efficiently operation by substituting the tracking data which can be produced faster than using an optical system, such as use of EM radiation tracker. The accuracy of the optical system may be higher, but its generation of the tracking data may be slower than the auxiliary system. The auxiliary system ensures that the augmented vision system runs at faster rate if needed. The auxiliary system minimises latency of the tracking data so that it reduces the risk of virtual symbology being appear incorrectly at the wrong placement on the overlay within the field of view of the platform operator. The auxiliary system also provides tracking data quicker to other parts of the platform systems that need such information at the faster rate, such as but not limited to 150Hz. This hybrid of optical and auxiliary systems for the tracking system also allows more accurate prediction of the platform operator's head position, orientation, movement whose information can aid the operation of the platform, such as but not limited to the aircraft.

Preferably, the auxiliary system is operable independently of the enhanced vision device, and is configured to operate with a period in the range of 1 - 20 milliseconds.

In this way, the rate of operation of the auxiliary system is ensured to be independent to the enhanced vision device so that the tracking data can be transmitted to different systems on the platform when needed. The auxiliary system also provides a back-up system for the augmented vision system if, in a very rare situation, the sources of EM radiation malfunctions or a fault has been introduced in tracking data from the source of EM radiation.

According to an aspect of the present invention, there is provided a vehicle comprising the augmented vision system according to preceding paragraphs. The vehicle may be aircraft.

According to an aspect of the present invention, there is provided a method of operating an augmented vision system for a platform operator. The method comprises: sensing a predetermined band of EM radiation in a field of view of the platform operator, and generating enhanced vision imagery, detecting a field of view of the platform operator using at least one source of EM radiation operable within the predetermined band of EM radiation, controlling the activation of the enhanced vision device, or controlling the activation of source of EM radiation in the tracking system, such that either: the enhanced vision device is sensing EM radiation in the field of view, and the source of EM radiation in the tracking system is inactive, or the source of EM radiation in the tracking system is active, and the enhanced vision device is inactive, and outputting the enhanced vision imagery to the platform operator.

Preferably, the outputting the enhance vision imagery comprises presenting the enhanced vision imagery.

Preferably, the method further comprises: defining a first period and a first duty cycle for the enhanced vision device activation; and defining a second period and a second duty cycle for the tracking system EM radiation source activation, for synchronising activation and inactivation.

Preferably, the method further comprises generating pulses of EM radiation and synchronising the pulses of EM radiation with closed state of a shutter for a camera.

Preferably, the first duty cycle is approximately 90% and the second duty cycle is approximately 10%.

Preferably, the second period is substantially equal to the first period.

Preferably, the predetermined band of EM radiation sensed by the enhanced vision device comprises non-visible EM frequencies.

Preferably, the method further comprises monitoring the field of view of the platform operator via an auxiliary system.

Preferably, the method further comprises operating the auxiliary system independently of the enhanced vision device with a period in a range of 1 - 20 milliseconds.

### BRIEF DESCRIPTION OF THE FIGURES

Embodiments of the invention will now be described by way of example only with reference to the figures, in which:
Figure 1 shows an example of an image captured by a camera sensitive to a band of electromagnetic radiation;
Figure 2 shows an embodiment of an augmented vision system according to the invention;
Figure 3A-3G show diagrams indicating different operations of an augmented vision system;
Figure 4 shows a diagram indicating an operation of an embodiment of the augmented vision system according to the invention;
Figure 5 shows a diagram indicating an operation of an embodiment of the augmented vision system according to the invention;
Figure 6 shows a flow chart of a method of operating an embodiment of the augmented vision system according to the invention; and
Figures 7 and 8 show examples of vehicle according to the invention.

### DETAILED DESCRIPTION

The present invention relates to an augmented vision system configured to output enhanced vision imagery to an operator. The operator may be a machine, in particular capable of running artificial intelligence (Al) system, or a human. The operator controls a platform comprising the augmented vision system.

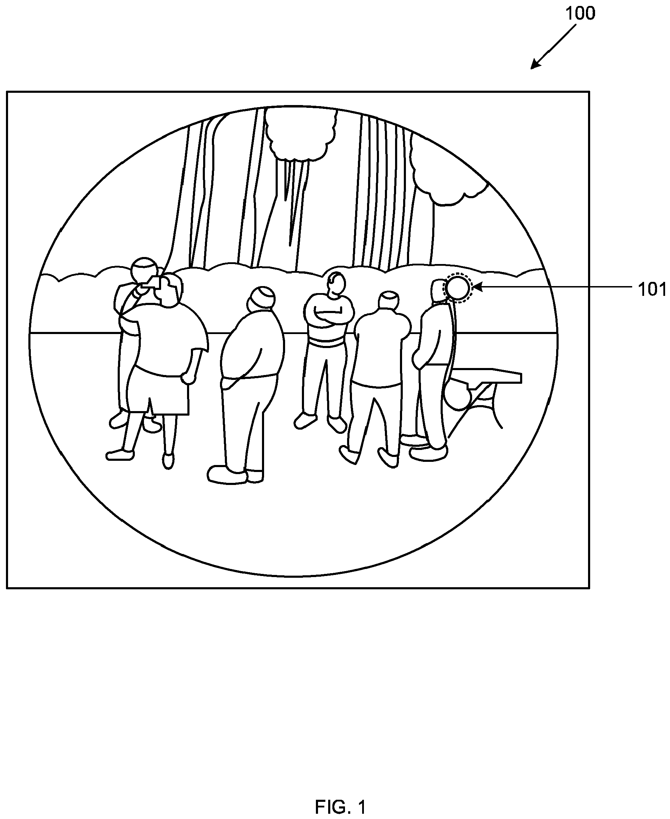

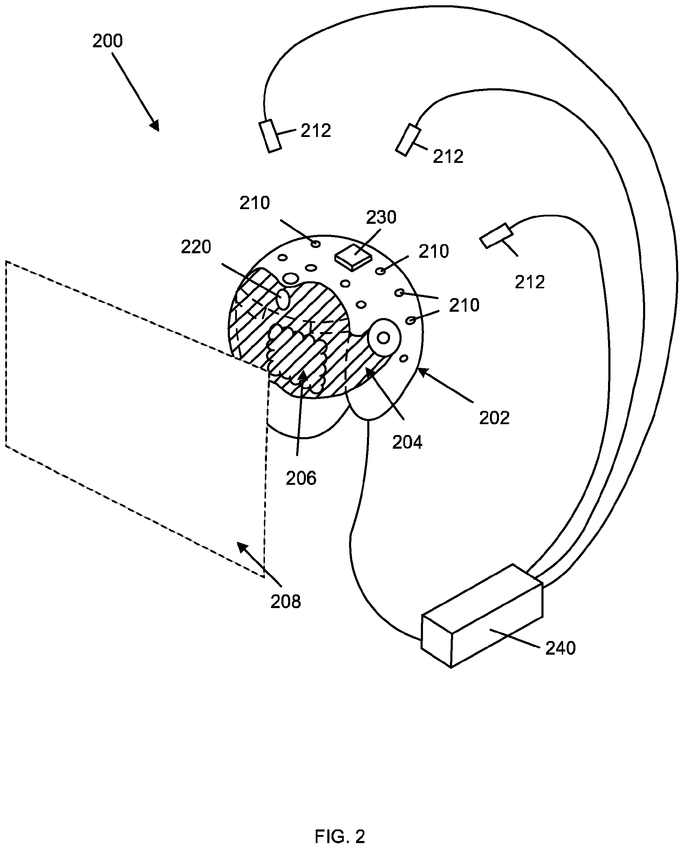

Figure 1 shows an example of an image received from an imaging device, such as a camera. The image 100 illustrates the problem the present invention aids to solve. The image 100 includes a low-quality area 101 as a saturated blob. This low-quality area 101 may result in undesirable effect, such as a glare effect, on a viewer. For example, but not limited to, in an aviation system, a first pilot may wear a helmet that comprises one or more tracker emitters (IREDs) which can cause this kind of low-quality area when the emission from the one or more tracker emitters directly or indirectly interferes with an imaging device. The one or more tracker emitters are part of a tracking system that is configured to determine and/or predict position, orientation and movement of the head of the first pilot such that the enhanced image can be provided in an accurate manner. In a scenario, the emission from the one or more tracker emitters may reflect off of a canopy in the cockpit or glow in such a way it affects the field view of the imaging device. Then the image generated by the imaging device, referenced as 220 in Figure 2, on the helmet of the first pilot may be affected. In other scenario, if the first and second pilots are sitting in the same cockpit, the image generated by an imaging device mounted on a helmet of a second pilot may be affected by the one or more tracker emitters (IREDs). The first and second pilots may wear the same type of helmet. In another scenario, the image generated by an imaging device mounted in the cockpit of an aircraft may be affected.

Figure 2 shows an embodiment of an augmented vision system 200 for a platform operator. The platform operator may be a machine, in particular capable of running AI system, or a human. The augmented vision system 200 comprises an enhanced vision device 220 for sensing a predetermined band of electromagnetic, EM, radiation in a field of view of the platform operator. In some embodiments, the predetermined band of EM radiation sensed by the enhanced vision device 220, comprises non-visible EM frequencies. In some embodiments, the predetermined band of EM radiation sensed by the enhanced vision device 220, comprises visible EM frequencies.

The enhanced vision device 220 generates an enhanced vision imagery 206. The enhanced vision imagery 206 comprises a view 208 of a scene and virtual symbology created by the augmented vision system 200. The virtual symbology may be created from data gathered from different systems on the platform to provide information relating to the scene, the path of the platform and/or the operation of the platform. The enhanced vision device 220 comprises a camera comprising a shutter which cycles between a closed state (e.g., shutter OFF) and an open state (e.g., shutter ON). In the closed state, the camera prevents external light getting through to its one or more imaging sensors. In the open state, the camera allows external light through to its one or more imaging sensors to capture the scene. In Figure 2, the camera has been arbitrarily illustrated, to show their interaction with the at least one source of EM radiations 210. The shutter may be an electronic shutter or a mechanical shutter.

In some embodiments, the enhanced vision device 220 is a night vision device. The night vision device is configured to be used in a low ambient light environment. The night vision device may comprise at least one of a night vision camera, night vision eyepiece and/or night vision googles. The night vision device may comprise a short-wave infrared camera.

The augmented vision system 200 comprises a tracking system for detecting a field of view of the platform operator. The tracking system comprises at least one source of EM radiation 210 operable within the predetermined band of EM radiation. In some embodiments, the predetermined band of EM radiation may be visible EM frequencies. In some embodiments, the predetermined band of EM radiation may be non-visible EM frequencies.

The present invention applies to different type of cameras that have different sensitivities issues with different spectrum of EM radiations. The present invention can also cater for the same camera being operated in different environments, taking the camera's inherent property of having different shutter operations in response to the ambient light to capture an image.

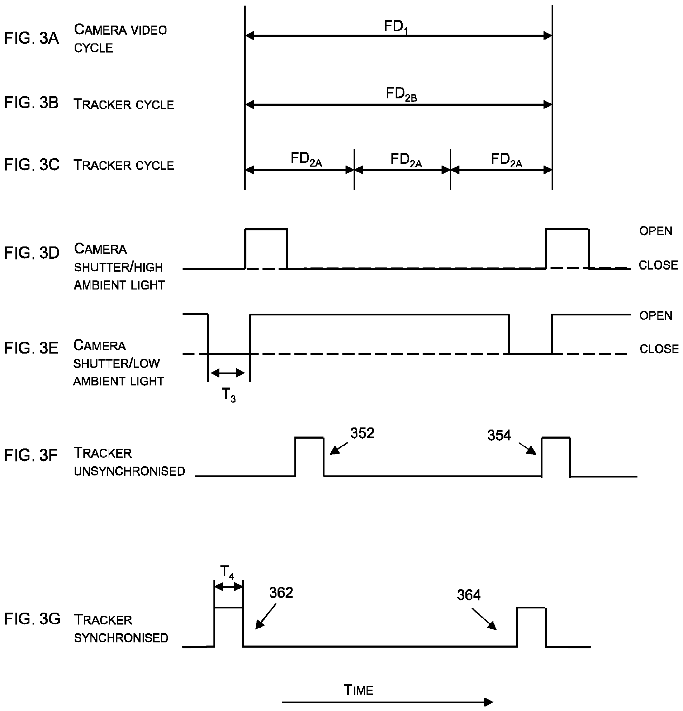

The at least one source of EM radiation 210 at the tracking system may be configured to generate pulses of EM radiation. The pulses are synchronised with the closed state of the shutter of the camera. In some embodiments, the period of a pulse of EM radiation (T₄, as shown in Figure 3G) is configured to be less than the period of the time when the camera shutter is in closed state (T₃, as shown in Figure 3E). Therefore, there is a small amount of time before and after the pulse of EM radiation when the shutter of the camera is in closed state even for the shortest period. The present invention utilises the period of time created by the shutter being shut off, at the end of the camera's video, image capture, cycle where the camera is downloading the image and is not light sensitive by temporally aligning the pulses of EM radiation to the end of the camera's video cycle.

The tracking system comprises at least one tracker camera 212. The at least one tracker camera 212 is configured to detect the EM radiation that are emitted by the at least one source of EM radiation 210. The at least one tracker camera 212 is configured to detect the EM radiation directly from the at least one source of EM radiation 210 and/or indirectly from EM radiation that have been reflected. The EM radiation from the at least one source of EM radiation 210 can be reflected off of a canopy of the platform and the tracking system can be configured to detect the reflected EM radiation. The at least one tracker camera 212 comprises a shutter. The shutter may be an electronic shutter or a mechanical shutter. The at least one tracker camera 212 is configured to operate with the at least one source of EM radiation 210 in synchronisation such that the at least one tracker camera 212 is configured to open its shutter when the at least one source of EM radiation 210 emits the EM radiation. In some embodiments, the tracking system comprises a plurality of tracker cameras 212.

In some embodiments, the at least one source of EM radiation 210 is provided at head worn mount. In addition, the at least one tracker camera 212 is mounted on the platform, for example, within the cockpit of an aircraft. The at least one tracker camera 212 is arranged in such a way that the at least one tracker camera 212 is oriented to detect the predetermined band of EM radiation emitted from the at least one source of EM radiation 210. In some embodiments, the tracking system comprises a plurality of sources of EM radiation 210 operable within the predetermined band. The plurality of sources of EM radiation 210 is configured to be worn by a user. The plurality of sources of EM radiation 210 may be provided at head worn mount. The head worn mount may be a helmet 202. In some embodiments, there are 40 to 60 sources of EM radiation 210 on the helmet 202.

In some embodiments, the at least one source of EM radiation 210 is located on the platform. In addition, the at least one tracker camera 212 is provided at head worn mount. The at least one tracker camera 212 is arranged in such a way that the at least one tracker camera 212 is oriented to detect the predetermined band of EM radiation emitted from the at least one source of EM radiation 210. In some embodiments, the tracking system comprises a plurality of sources of EM radiation 210 operable within the predetermined band. The plurality of sources of EM radiation 210 is configured to surround the operator. The plurality of sources of EM radiation 210 may be fixed to the platform. In some embodiments, there are 40 to 60 sources of EM radiation 210 in the platform.

In some embodiments, the at least one source of EM radiation 210 is provided at head worn mount. In addition, the at least one tracker camera 212 is provided at head worn mount. The tracking system comprises at least one reflector. The at least one reflector may be mounted on the platform. The at least one reflector reflects the EM radiation emitted from the at least one source of EM radiation 210. The at least one tracker camera 212 on the head worn mount is configured to detect the predetermined band of EM radiation emitted from the at least one source of EM radiation 210. In some embodiments, the tracking system comprises a plurality of sources of EM radiation 210 operable within the predetermined band. The plurality of sources of EM radiation 210 is configured to be worn by a user. The plurality of sources of EM radiation 210 may be provided at head worn mount. The head worn mount may be a helmet 202. In some embodiments, there are 40 to 60 sources of EM radiation 210 on the helmet 202.

The tracking system is configured to monitor the field of view of the platform operator. In some embodiments, the tracking system is configured to monitor at least one of: the orientation, the position or the movement of a head of the platform operator. By monitoring the at least one of the orientation, the position, and the movement of the head of the platform operator, the tracking system can provide tracking data (of the head of the platform operator) to determine and monitor the field of view of the platform operator and provides tracking data to different systems of the platform. The tracking system is configured to monitor the field of view of the platform operator by using optical system. The optical system comprises the at least one source of EM radiation 210 and the at least one tracker camera 212. Alternatively or in addition, the tracking system is configured to monitor the field of view of the platform operator by using auxiliary system 230.

In some embodiments, the tracking system further comprises an auxiliary system 230. The auxiliary system 230 is configured to monitor the field of view of the platform operator. The auxiliary system 230 is configured for monitoring the orientation and/or position of a head of the operator, and thereby monitoring their field of view. The auxiliary system 230 may comprise at least one of: inertial devices, such as a gyroscope or an accelerometer, and/or any other position sensing system capable of detecting a position, an orientation, a movement, a direction of movement, and/or a speed of movement of the head of the platform operator. The gyroscope may be a three axes gyroscope. The auxiliary system provides means to change pulse rate and adjust a duty cycle D₂ of the at least one source of EM radiation so that a single pulse (as shown in Figure 3B) of the at least one source of EM radiation per camera video cycle (as shown in Figure 3A) instead of three pulses (as shown in Figure 3C) per camera video cycle. For example, in some embodiments, the auxiliary system 230 is configured to operate at 150/180 Hz, but the overall pulse rate for the at least one source of EM radiation is configured to reduce from 150/180 Hz to 50/60 Hz to match the rate of operation of the camera. In this way, the dynamic performance of the enhanced vision system is not compromised. The latency and prediction capability of the tracking system is not compromised and the tracking data is transmitted to different systems of the platform for the purpose that can be other than providing enhanced vision imagery.

In some embodiments, the auxiliary system 230 is operable independently of the enhanced vision device 220. The rate of operation between the at least one source of EM radiation and the auxiliary system 230 are independent of each other. In some embodiments, the auxiliary system 230 is configured to operate with a period in the range of 1 - 20 milliseconds. In some embodiments, the auxiliary system 230 is configured to operate with a period in the range of 5 to 8 milliseconds. In some embodiments, the auxiliary system 230 is configured to operate at 100Hz to 1 kHz. The auxiliary system 230 can be operated at a quicker rate without much cost to the augmented vision system 200 as it produces tracking result relatively faster than using only the optical system, such as using at least one source of EM radiation 210.

The augmented vision system 200 comprises a display system 204 for overlaying an enhanced vision imagery into a view 206 of the operator. The display system 204 may be a visor mounted on a helmet, a head-mounted display, or a head-up display.

The augmented vision system 200 comprises switching circuitry 240. The switching circuitry 240 is configured to control the activation of the enhanced vision device 220, and/or to control the activation of source of EM radiation in the tracking system. The switching circuitry 240 is configured to activate the enhanced vision device 220 to sense EM radiation in the field of view of the operator and inactivate the source of EM radiation 210 in the tracking system. Alternatively, the switching circuitry 240 is configured to activate the source of EM radiation 210 in tracking system and inactivate the enhanced vision device 220. The switching circuitry 240 is configured to activate the source of EM radiation 210 so that the pulse of the source of EM radiation 210 is synchronised to and within the shutter closed period of the camera. When the switching circuitry 240 is configured to control the source of EM radiation 210 and the camera, the switching circuitry 240 allows an offset to cater for the time the camera needs to read its sensor. The switching circuitry is configured to communicate with different systems on the platform. The switching circuitry is configured to transmit tracking data to different systems on the platform.

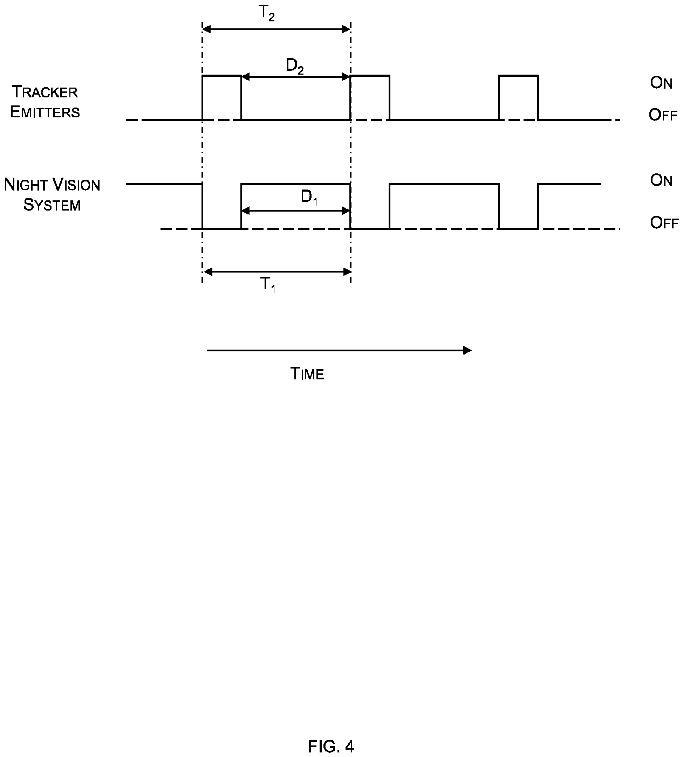

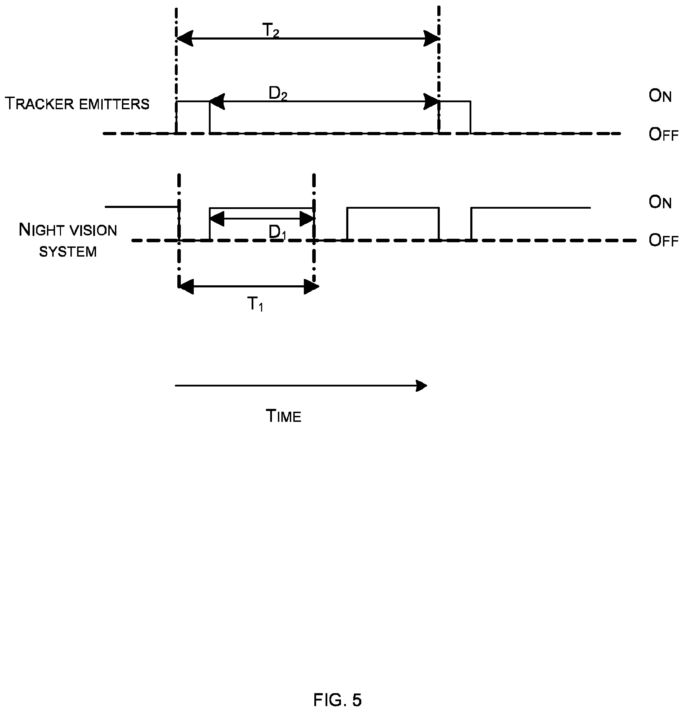

In some embodiments, the switching circuitry defines a first period T₁ and a first duty cycle D₁ for the enhanced vision device 220 activation as can be seen in Figures 4 and 5. The switching circuitry may define a second period T₂ and a second duty cycle D₂ for the tracking system EM radiation source activation as can be seen in Figures 4 and 5. The switching circuitry defines the first period T₁, the first duty cycle D₁, a second period T₂ and a second duty cycle D₂ for synchronising the activation and inactivation of the enhanced vision device 220 and the tracking system.

Figure 3A shows an embodiment of a camera's full duty cycle FD_{1.} The camera duty cycle FD₁ starts at a point of time when the camera shutter opens and finishes at the subsequent point of time when the camera shutter opens.

Figure 3B shows an embodiment of a tracker's full duty cycle FD_{2B}. The tracker's full duty cycle FD_{2B} matches that of the camera's full duty cycle FD_{1.}

Figure 3C shows an embodiment of a tracker's full duty cycle FD_{2A.} The tracker emitter pulses three times, as indicated by the tracker's full duty cycles FD_{2B}, within a time period when the camera's full duty cycle FD₁ of the camera occurs.

Figures 3B and 3C illustrate that the tracker emitter pulsing three times, as indicated by the tracker's full duty cycles FD_{2A}, within a time period when the camera's full duty cycle FD₁ of the camera occurs. In such case, the camera shutter may remain open when the three tracker's full duty cycles FD_{2B} occurs. This results in ineffective augmented vision system as the low-quality area is introduced into the image of the camera. To avoid having to excessive pulsing of the IREDs, the tracking system may use the auxiliary system 230 to compensate for tracking data needed to provide enhanced vision imagery correctly. The auxiliary system 230 is configured to provide intermittent tracking data from monitoring of the field of view of the platform operator. In some embodiments, the operational rate of the camera is 60 Hz and lasts 16.7 milliseconds and the operational rate of the auxiliary system is 150 Hz and lasts 6.7 milliseconds whilst the operational rate of the at least one source of the EM radiation remains the same as the operational rate of the camera. In some embodiments, the operational rate of the camera is 50 Hz and lasts 20 milliseconds and the operational rate of the auxiliary system 230 is 180 Hz and lasts 5.5 milliseconds whilst the operational rate of the at least one source of the EM radiation remains the same as the operational rate of the camera. In some embodiments, the augmented vision system 200 comprises the at least one source of EM radiation 210 operating at the same rate as the enhanced vision device 220 but the tracking system also internally operates at a higher rate by using the auxiliary system 230 whose outputs is at a higher rate as shown in Figure 3C.

Figure 3D shows the operation of the camera shutter at a high ambient light. Figure 3E shows the operation of the camera shutter at a low ambient light. The camera shutter remains open for a relatively shorter period of time in the hight ambient light. The camera is configured to operate to open the camera shutter for a short period of time and close the camera shutter for a long period of time. The camera is configured to repeatedly open and close the camera shutter.

The camera shutter remains open for a relatively longer period of time in the low ambient light. The camera is configured to operate to open the camera shutter for a long period of time and close the camera shutter for a short period of time. The camera shutter remains open for a longer period of time in the low ambient light in comparison with the camera in the high ambient light. Therefore, the camera operating in the low ambient light is more likely to capture the EM radiations. For example, a night vision system is more susceptible to produce a lower quality image due to the EM radiation sensitivity as it operates in very low ambient light. The switching circuitry is configured to control the operation of the camera. The switching circuitry is configured to control the cycle of the camera shutter being open and close. The camera captures an image when during the period when the shutter of the camera is open.

Figure 3F illustrates a pulse of tracker emitter that is not synchronised. When figure 3F is compared to figures 3D and 3E, the tracker pulses (i.e., emits EM radiation) when the camera shutter is opened. The first pulse 352 may not be captured by the camera shutter operating under high ambient light setting but the first pulse 352 is captured by the camera shutter operating under low ambient light setting. In contrast, the second pulse 354 is captured by both cameras operating under high and low ambient light setting. The unsynchronised tracker produces compromised image with low quality.

Figure 3G illustrates a pulse of tracker emitter that is synchronised according to the present invention. When figure 3G is compared to figures 3D and 3E, both the camera operating under high ambient light setting and the camera operating under high ambient light setting do not capture the tracker pulses 362, 364. The tracker pulses 362, 364 (i.e., emits EM radiation) when the cameras shutters are closed. The augmented vision system according to the present invention provides a synchronised activation and deactivation of the camera and the tracking system such that the EM radiation does not affect the captured image. The time period T_{4,} indicates when the EM radiation is emitted. The time period T₄ may be 200 us. The time period T₄ coincides with T_{3.}

Figure 4 shows an embodiment of the augmented vision system 200 according to the present invention. In particular, Figure 4 shows the operation of the at least one source of EM radiation and the enhanced vision device 220, such as tracker emitter(s) 210 and the night vision system. Even though the description relates to an embodiment for use with a night vision system, The operation described in Figure 4 may also apply to an augmented vision system 200 comprising any kind of camera with sensitivity to a band of EM radiation. The switching circuitry is configured to define the first duty circle D₁ which represents a period when the night vision system is activated (i.e., ON). The first duty cycle D₁ may be approximately 90%. The switching circuitry 240 is configured to define the second duty circle D₂ which represents a period when the at least one source of EM radiation 210 is inactivated (i.e., OFF). The second duty cycle D₂ may be approximately 10%. The first period T₁ may be in the range of 5 - 40 milliseconds. The second period T₂ may be substantially equal to the first period T₁. The first period T₁ and the second period T₂ represent a full cycle of the at least one source of EM radiation and the night vision system respectively. Figure 4 shows the at least one source of EM radiation 210 operating at the same rate as the enhanced vision device 220. The tracking system comprising the optical system may operate as described in Figure 4. In some embodiments, even though the at least one source of EM radiation 210 operates at the same rate as the enhanced vision device 220, the tracking system may also internally operate at a higher rate. In such case, the tracking system may use the auxiliary system 230 whose outputs is at a higher rate as shown in Figure 3C. The tracking system comprising the optical system and auxiliary system 230 may also operate as described in Figure 4.

Figure 5 shows an embodiment of the augmented vision system 200 according to the present invention. In particular, Figure 5 shows the operation of the at least one source of EM radiation, such as tracker emitter(s) 210 and the night vision system. Even though the description relates to an embodiment for use with a night vision system, the operation described in Figure 5 may also apply to an augmented vision system 200 comprising any kind of camera with sensitivity to a band of EM radiation. The switching circuitry is configured to define the first duty circle D₁ which represents a period when the night vision system is activated (i.e., ON). Figure 5 describes an embodiment where the operational rate of the at least one source of EM radiation 210 is reduced, so that two duty cycles of the camera occur per a single pulse of EM radiation. The operational rate of the at least one source of EM radiation 210 is half the operational rate of the enhanced vision device 220. The operational rate of the at least one source of EM radiation 210 is slower than the operational rate of the enhanced vision device 220. The switching circuitry 240 is configured to minimise the camera's exposure to the EM radiation. In such case, the switching circuitry 240 is configured to use the auxiliary system 230 at a higher operational rate. The tracking data generated by the auxiliary system 230 is used by the augmented vision system and ensure that the augmented vision system does not have to rely heavily on the optical system providing diversity of the operational configuration. The tracking system comprising the optical system and the auxiliary system 230 may operate as described in Figure 5.

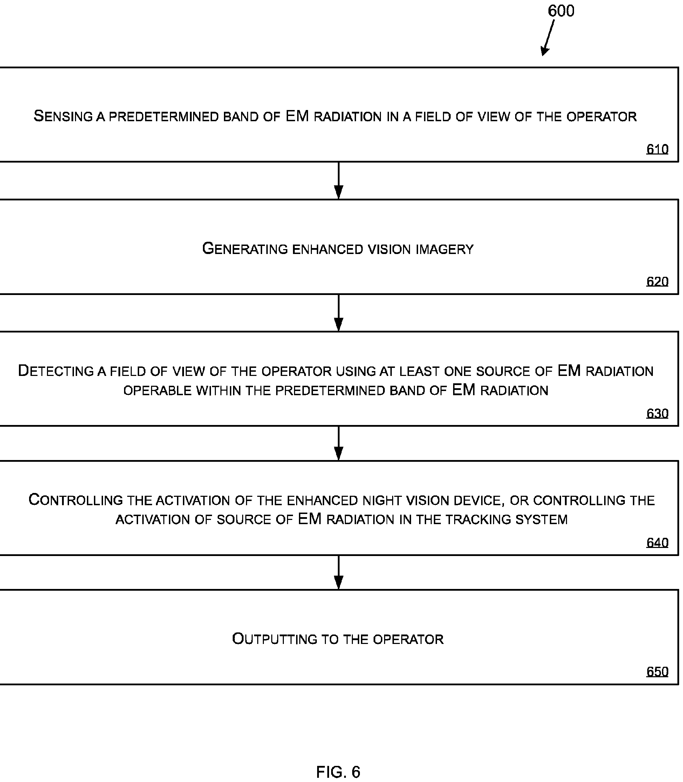

Figure 6 shows a flow chart of a method 600 of operating an embodiment of the augmented vision system according to the present invention. At step 610, a predetermined band of EM radiation in a field of view of the operator is sensed. At step 620, an enhanced vision imagery is generated. At step 630, detecting a field of view of the platform operator using at least one source of EM radiation operable within the predetermined band of EM radiation. At step 640, the activation of the enhanced vision device is controlled and/or the activation of source of EM radiation in the tracking system is controlled such that either the enhanced vision device is sensing EM radiation in the field of view and the tracking system is inactive or the source of EM radiation in the tracking system is active and the enhanced vision device is inactive. At step 650, the enhanced vision imagery is outputted to the platform operator. The output may comprise presenting the enhanced vision imagery. In some embodiments, a first period T₁ and a first duty cycle D₁ for the enhanced vision device activation is defined, by a switching circuitry, for synchronising activation and inactivation. In some embodiments, a second period T₂ and a second duty cycle D₂ for the tracking system EM radiation source activation is defined, by a switching circuitry, for synchronising activation and inactivation. The first duty cycle D₁ may be approximately 90% and the second duty cycle D₂ may be approximately 10%. The second period T₂ may be substantially equal to the first period T1. Pulses of EM radiation may be generated and synchronised with closed state of a shutter for a camera. The predetermined band of EM radiation sensed by the enhanced vision device 220 may comprise non-visible EM frequencies. In some embodiment, the field of view of the platform operator is monitored by an auxiliary system. The auxiliary system may be operated independently of the enhanced vision device 220. The auxiliary system may be configured to operate with a period in the range of 1 - 20 milliseconds.

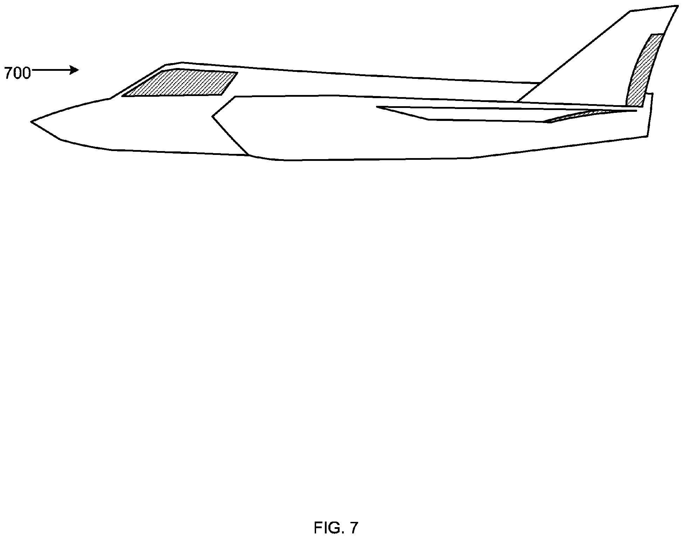

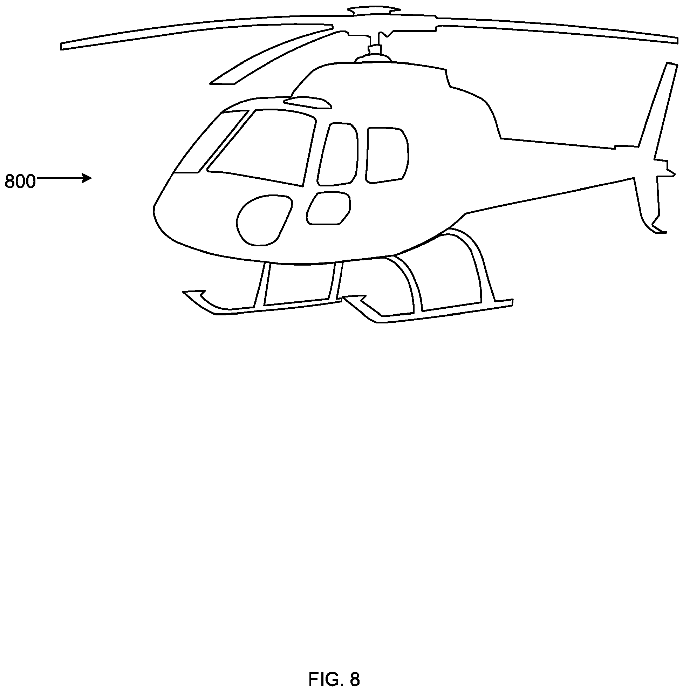

Figures 7 and 8 illustrate vehicles comprising the augmented vision system 200. Figure 7 shows an aeroplane 700 comprising the augmented vision system 200. Figure 8 shows a helicopter 800 comprising the augmented vision system 200.

## Claims

1. An augmented vision system (200) for a platform operator, the augmented vision system comprising:
an enhanced vision device (220) for sensing a predetermined band of electromagnetic, EM, radiation in a field of view of the platform operator, and generating enhanced vision imagery;
a tracking system for detecting a field of view of the platform operator, the tracking system comprising at least one source of EM radiation (210) operable within the predetermined band of EM radiation;
a display system (204) for overlaying enhanced vision imagery into the view (206) of the platform operator; and
switching circuitry (240) configured to control the activation of the enhanced vision device (220), or to control the activation of source of EM radiation in the tracking system,
such that either
the enhanced vision device (220) is sensing EM radiation in the field of view, and the source of EM radiation (210) in the tracking system is inactive,
or
the source of EM radiation (210) in the tracking system is active, and the enhanced vision device (220) is inactive.

2. The augmented vision system (200) according to claim 1 wherein the switching circuitry defines:
a first period (T₁) and a first duty cycle (D₁) for the enhanced vision device (220) activation; and
a second period (T₂) and a second duty cycle (D₂) for the tracking system EM radiation source activation,
for synchronising activation and inactivation.

3. The augmented vision system (200) according to any of the preceding claims wherein the enhanced vision device (220) comprises a camera comprising a shutter which cycles between a closed state and an open state, and the at least one source of EM radiation (210) at the tracking system is configured to generate pulses of EM radiation, synchronised with the closed state of the shutter.

4. The augmented vision system (200) according to any preceding claim, wherein the first duty cycle (D₁) is approximately 90% and the second duty cycle (D₂) is approximately 10%.

5. The augmented vision system (200) according to any of the preceding claims, wherein the first period (T₁) is in the range of 5 - 40 milliseconds.

6. The augmented vision system (200) according to any of the preceding claims wherein the second period (T₂) is substantially equal to the first period (T₁).

7. The augmented vision system (200) according to any of the preceding claim wherein the enhanced vision device (220) is a night vision device, optionally comprising at least one of a night vision camera, night vision eyepiece and/or night vision googles.

8. The augmented vision system (200) according to any of the preceding claims wherein the predetermined band of EM radiation sensed by the enhanced vision device (220), comprises non-visible EM frequencies.

9. The augmented vision system (200) according to any of the preceding claims wherein the tracking system comprises a plurality of sources of EM radiation (210) in the predetermined band, which are configured to be worn by the user.

10. The augmented vision system (200) according to any of the preceding claims wherein the tracking system further comprises an auxiliary system (230) for monitoring the orientation of a head of the platform operator, and thereby monitoring the field of view of the platform operator.

11. The augmented vision system (200) according to claim 10 wherein the auxiliary system (230) is operable independently of the enhanced vision device (220), and is configured to operate with a period in the range of 1 - 20 milliseconds.

12. A vehicle (700, 800) comprising the augmented vision system (200) according to any of claims 1 to 11.

13. A method (600) of operating an augmented vision system for a platform operator, the method comprising:
sensing (610) a predetermined band of EM radiation in a field of view of the platform operator, and generating (620) enhanced vision imagery,
detecting (630) a field of view of the platform operator using at least one source of EM radiation operable within the predetermined band of EM radiation,
controlling (640) the activation of the enhanced vision device, or controlling the activation of source of EM radiation in the tracking system,
such that either:
the enhanced vision device is sensing EM radiation in the field of view, and the source of EM radiation in the tracking system is inactive,
or
the source of EM radiation in the tracking system is active, and the enhanced vision device is inactive,
and outputting (650) the enhanced vision imagery to the platform operator.

14. The method according to claim 13, further comprising:
defining a first period (T₁) and a first duty cycle (D₁) for the enhanced vision device activation; and
defining a second period (T₂) and a second duty cycle (D₂) for the tracking system EM radiation source activation,
for synchronising activation and inactivation.

15. The method according to claims 13 or claim 14, further comprising:
generating pulses of EM radiation; and
synchronising the pulses of EM radiation with closed state of a shutter for a camera.
